# EUROPÄISCHE PATENTSCHRIFT

(11) **EP 1 794 031 B1**
(45) Veröffentlichungstag und Bekanntmachung des Hinweises auf die Patenterteilung: **24.03.2010**
(21) Anmeldenummer: 05796825.7
(22) Anmeldetag: 21.09.2005
(51) Int. Cl.: B60R 9/04

(54) **DACHTRÄGERSYSTEM FÜR EIN FAHRZEUG SOWIE VERFAHREN ZUR HERSTELLUNG DES DACHTRÄGERSYSTEMS UND FAHRZEUG MIT EINEM DACHTRÄGERSYSTEM**
ROOF RACK SYSTEM FOR A VEHICLE, METHOD FOR PRODUCING THE ROOF RACK SYSTEM AND VEHICLE COMPRISING A ROOF RACK SYSTEM
SYSTEME DE GALERIE DE TOIT POUR VEHICULE, PROCEDE POUR REALISER LE SYSTEME DE GALERIE DE TOIT, ET VEHICULE EQUIPE D'UN SYSTEME DE GALERIE DE TOIT

(30) Priorität: 24.09.2004 DE 102004047565; 20.04.2005 DE 102005018158
(43) Veröffentlichungstag der Anmeldung: 13.06.2007
(73) Patentinhaber: Hans und Ottmar Binder GmbH Oberflächenveredelung, 89558 Böhmenkirch (DE)
(72) Erfinder: BINDER, Hans, 89558 Böhmenkirch (DE); BINDER, Ottmar, 89558 Böhmenkirch (DE)
(74) Vertreter: Grosse, Rainer
(86) Internationale Anmeldenummer: PCT/EP2005/010198
(87) Internationale Veröffentlichungsnummer: WO 2006/032474

(56) Entgegenhaltungen:
- DE-U1- 8 621 340
- DE-U1- 8 910 936
- DE-U1- 20 205 087
- US-A- 5 782 392

## Beschreibung

Die Erfindung betrifft ein Dachträgersystem für ein Fahrzeug, insbesondere für einen Personenkraftwagen, sowie ein enstprechendes Verfahren zur Herstellung des Dachträgersystems und Fahrzeug mit einem Dachträgersystem.

Personenkraftwagen können auf ihrem Dach ein Dachträgersystem in Form einer Dachreling, die aus zwei, parallel zueinander angeordneten Dachleisten bestehen, besitzen. Diese Dachleisten können ein- oder mehrteilig gestaltet sein. Dachleisten, welche drei- oder mehrteilig gestaltet sind, weisen mindestens ein Mittelteil sowie zwei mit dem Mittelteil zusammengesteckte Endteile auf. Die beiden Endteile sind mit einem Abstand zur Dachfläche des Fahrzeugs erzeugenden Fußstreben versehen. Eine entsprechende Fußstrebe ist im mittleren Bereich des Mittelteils angeordnet. Die bekannte Dachreling hat sich bewährt und gibt dem Fahrzeug ein charakteristisches Aussehen.

Die Erfindung befasst sich mit einer neuartigen und kostengünstigen Konstruktion eines Dachträgersystems mit dem ein besonderer, optischer Effekt einhergeht.

Druckschrift DE-U-8621340 offenbart ein solches Dachträgersystem nach dem Oberbegriff des Anspruchs 1.

Für das erfindungsgemäße Dachträgersystem ist mindestens eine Dachleiste vorgesehen, die eine im Wesentlichen durchgängig auf die Fahrzeugkarosserie auflegbare, sich über die Länge der Dachleiste erstreckende, der Fahrzeugkarosserie angepasste Auflagefläche aufweist. Durch die fußstrebenfreie Konstruktion überragt die Dachleiste das Fahrzeugdach nur etwa in Höhe der Leistendicke bei hochgenauem Passsitz zur Fahrzeugkarosseriekontur, insbesondere zu den Seitenwandrahmen des Kraftfahrzeugs, auf denen die Dachleisten montierbar sind. Die Anlagefläche entspricht im Wesentlichen der Fahrzeugkarosseriekontur. Es kann dabei auf Abdeckmittel, wie zum Beispiel Einfassgummis oder dergleichen verzichtet werden. Es ist es möglich, direkt auf dem Fahrzeugdach und dieses nur wenig überragende Dachleisten anzuordnen, die ferner zu ebenmäßigen und daher optisch sehr ansprechenden Randspalten führt. Die Konturierung der Dachleiste wird durch einen formgebenden Biegevorgang erzeugt. Es ist eine Befestigungsvorrichtung zur Befestigung der Dachleiste an der Fahrzeugkarosserie vorgesehen. Die Befestigungsvorrichtung weist ein Halteelement auf, dass in einem Hohlraum der Dachleiste nach Art eines Nutsteins angeordnet ist. Hierdurch lässt sich die Dachleiste nach außen unsichtbar am Fahrzeugdach festlegen. Die Befestigung kann sehr hohe Lasten bewältigen und ist selbst in den abgeflachten Endbereichen der Dachleiste problemlos einsetzbar.

Die Dachleiste weist mindestens eine Ausnehmung auf, die an ihrer dem Fahrzeugdach zugewandten Seite angeordnet ist. Die Ausnehmung erstreckt sich dabei ausgehend von den Enden der Dachleiste in Längsrichtung der Dachleiste. Die Breite der Ausnehmung ist dabei geringer, insbesondere deutlich geringer, als die Breite der Anlagefläche. Die Dachleiste weist einen zumindest teilweise umschlossenen Hohlraum auf. Durch die Ausnehmung ergibt sich eine bereichsweise Öffnung des Hohlraums (Hohlprofils). Durch diese Öffnung des Hohlraums wird ein Halteelement, insbesondere ein Nutenstein, in den Hohlraum eingeschoben. Der Nutenstein ist insbesondere ein Gussteil. An dem Haltelement ist ein Befestigungselement angeordnet, insbesondere ein Stehbolzen mit einem Gewinde, den in ein im Nutenstein angeordnetes Gewinde eingreift. Das Gewinde ist am Nutenstein derart angeordnet, dass auch im eingeschobenen Zustand des Nutensteins die Gewindeöffnung durch die Ausnehmung hindurch erreichbar ist. Dadurch wird es in einem nächsten Schritt möglich einen Stehbolzen, der zumindest teilweise mit einem Gewinde versehen ist, in das Gewinde des Nutensteins einzudrehen. Zwar ist es grundsätzlich auch möglich, Nutenstein und Stehbolzen einstückig zu fertigen, doch ergibt sich durch die zweiteilige Herstellung eine Vereinfachung des Produktionsprozesses. Die Gewinde am Stehbolzen sind dabei derart angeordnet, dass das Gewinde am einen Ende des Stehbolzens in das Gewinde des Nutensteins eingreift und dass ein zweites Gewinde am Stehbolzen die sichere Befestigung des Stehbolzens an der Fahrzeugkarosserie mittels einer Schraubverbindung ermöglicht. An den Enden der Dachleiste kann die Ausnehmung vergrößert sein, um das Einführen des Nutensteins zu erleichtern. Dies ist insbesondere dann hilfreich, wenn die Dachleiste an Ihren Enden flach zuläuft. In einem optionalen Schritt kann nun zusätzlich ein Plastiksperrelement in den Hohlraum nachgeschoben werden, so dass der Nutenstein zwischen dem Ende der Ausnehmung und dem Plastiksperrelement festgehalten wird. Dies vereinfacht die Montage, da der Nutenstein so fixiert ist.

Die Dachleiste weist in ihrem Querschnitt ein Profil auf. Dabei ist der Querschnitt des Nutensteins vorzugsweise dem inneren Querschnitt der Dachleiste angepasst. Dadurch können auch große Kräfte, die zwischen der Fahrzeugkarosserie und dem Dachträgersystem wirken sicher aufgenommen werden. Der Nutenstein weist vorzugsweise an seiner der Ausnehmung zugewandten Seite einen Vorsprung auf, der in die Ausnehmung eingreift und so eine Führung des Nutensteins und einen Anschlag des Nutensteins innerhalb der Ausnehmung ermöglicht.

Mittels der Erfindung ist es also insbesondere möglich eine einstückige Dachleiste zu fertigen, da die tragende Befestigung der Dachleiste nun mittels mindestens eines Haltelementes erfolgt, das über mindestens ein Befestigungselement mit der Fahrzeugkarosserie verbunden wird. Es lassen sich daher zusätzliche teure Füße zur Befestigung der Dachleiste vermeiden. Zudem lässt sich so eine nahezu spaltfreie Anordnung der Dachleiste an der Fahrzeugkarosserie realisieren.

Die Ausnehmung kann auch von den Enden der Dachleiste entfernt angeordnet sein, doch ergibt sich mittels der vorgeschlagenen Anordnung eine besonders günstige Anordnung der tragenden Halte-und Befestigungselemente, sowie eine hohe Stabilität der Dachleiste.

### Zeichnungen

Die Erfindung wird nun anhand von Ausführungsbeispielen näher erläutert. Dabei zeigen
- Figur 1: die Anordnung einer Dachleiste auf einer Fahrzeug- karosserie,
- Figur 2: die Befestigung der Dachleiste an der Fahrzeugkaros- serie mittels eines Nutensteins und Stehbolzens,
- Figur 3: eine Ausnehmung an einem Ende der Dachleiste,
- Figur 4: eine Ausnehmung in der Dachleiste, die vom Ende der Dachleiste abgesetzt ist,
- Figur 5: einen Stehbolzen mit zwei Gewinden,
- Figur 6: einen Nutenstein in einer Ansicht von oben,
- Figur 7: einen Nutenstein in der Ansicht von unten,
- Figur 8: einen Nutenstein mit eingeschraubten Stehbolzen in der Draufsicht,
- Figur 9: einen Nutenstein mit eingeschraubten Stehbolzen in einer dreidimensionalen Ansicht,
- Figur 10: einen Ausschnitt aus einer Dachleiste,
- Figur 11: ein Ende einer Dachleiste in einer dreidimensionalen Ansicht,
- Figur 12: das Ende einer Dachleiste in einer Seitenansicht,
- Figur 13: einen Stehbolzen in einer in der Dachleiste angeordne- ten Blindniete,
- Figur 14: ein Plastiksperrelement, und
- Figur 15: einen Querschnitt durch eine Dachleiste mit eingeführ- tem Nutenstein,

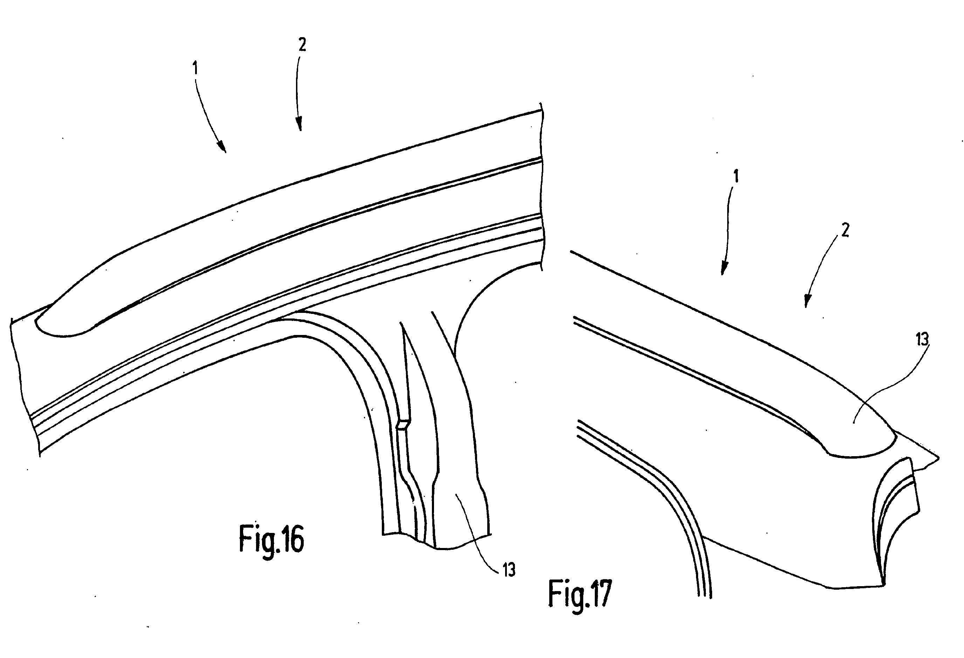

- Figur 16: das vordere Ende der Dachleiste, und
- Figur 17: das hintere Ende der Dachleiste.

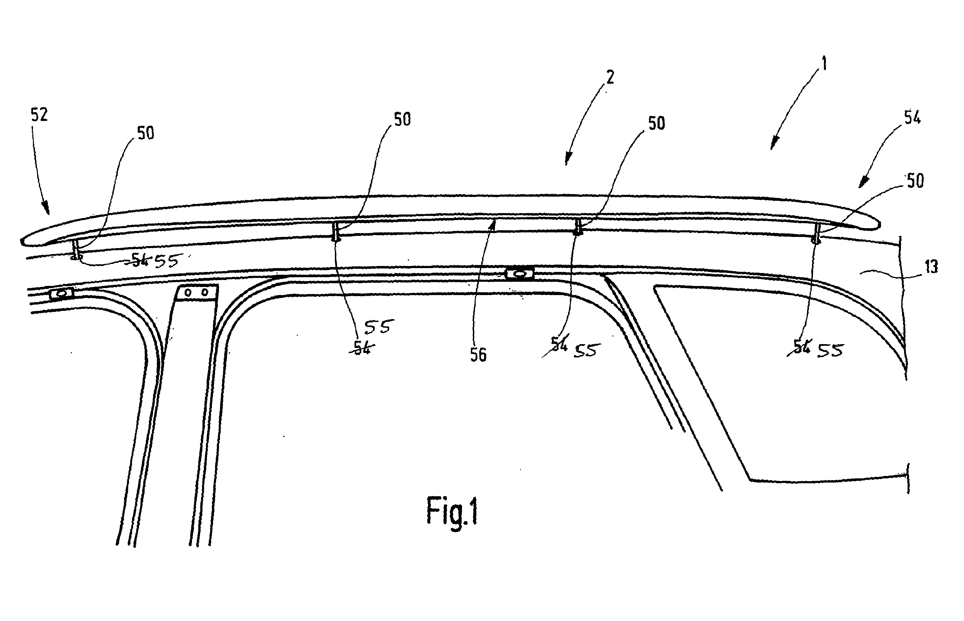

Figur 1 zeigt ein Dachträgersystem 1 mit einer Dachleiste 2. An der Dachleiste sind vier Stehbolzen 50 angeordnet, wobei die Stehbolzen 50 am vorderen Ende 52 der Dachleiste 2 beziehungsweise am hinteren Ende 54 der Dachleiste 2 in Nutensteine eingeschraubt sind, während die beiden anderen Stehbolzen in Blindnieten eingeschraubt sind. An der Fahrzeugkarosserie 13 befinden sich entsprechende Löcher 55 in die die Stehbolzen 50 eingesteckt werden und dann von der Innenseite der Karosserie her befestigt werden. Die Befestigung von der Innenseite her wird vorzugsweise mittels Muttern vorgenommen, die mit einem auf dem Stehbolzen ausgebildeten Gewinde zusammenwirken. Es ist zu erkennen, dass die Dachleiste 2 an ihrem vorderen und hinteren Ende 52, 54 abgeflacht ist. Des Weiteren ist eine Dachträgerbefestigungskante 56 zu erkennen, in die eine Kralle einer Dachgepäckträgerbefestigung eingreifen kann.

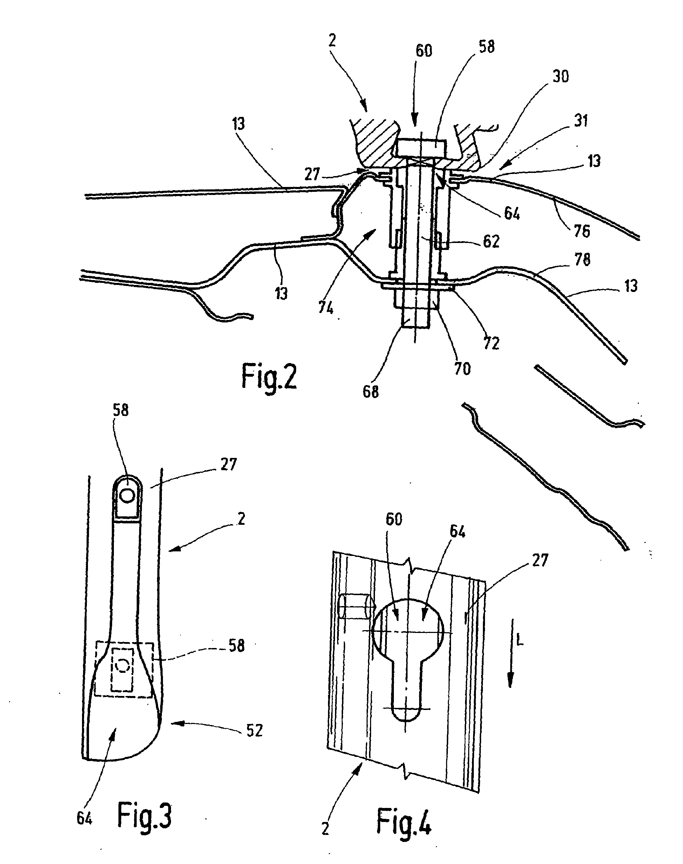

Figur 2 zeigt eine Dachleiste 2 auf, die an einer Fahrzeugkarosserie 13 angeordnet ist. Es ist dabei der Nutenstein 58 zu erkennen, der in einem Hohlraum 60 der Dachleiste 2 angeordnet ist. In den Nutenstein 60 ist ein Stehbolzen 62 eingeschraubt, der durch eine Ausnehmung 64 in der Dachleiste 2 hindurch ragt. Auf einem zweiten Gewinde 68 ist eine Mutter 70 angeordnet, die im Zusammenspiel mit der Unterlegscheibe 72 die Befestigung der Dachreling 2 einer Fahrzeugkarosserie 13 sicherstellt. Um sicherzustellen, dass bei einer Montage der Dachreling 2 der Raum zwischen einem oberen Blech 76 und einem unteren Blech 78 nicht zusammengedrückt wird, ausgebildet. Die Funktion dieses Abstandshaltersystems 74 ist aus der im deutschen Gebrauchsmuster Nummer 202 05 087.4, eingetragen am 13. Juni 2002, bekannt. Die dort erfolgten Erläuterungen zum Abstandshaltersystem 74 werden hiermit ausdrücklich zum Bestandteil dieser Anmeldung gemacht.

Figur 3 zeigt eine Dachleiste 2 in der Ansicht von der Anlagefläche 27 her. Es ist dabei deutlich zu erkennen, dass die Ausnehmung 64 am vorderen Ende 52 der Dachleiste 2 verbreitert ist. Dadurch wird das Einschieben des Nutensteins 58 erleichtert. Mit einer gestrichelten Linie ist der Nutenstein 58 in einer Position gezeigt in der gerade im vergrößerten Bereich der Ausnehmung 64 in die Dachleiste 2 eingeschoben wurde.

Figur 4 zeigt eine Ausnehmung 64, die nicht an einem Ende der Dachleiste 2 angeordnet ist. Auch hier zeigt sich ein vergrößerter Bereich, durch den der Nutenstein 58 in den Hohlraum der Dachleiste 2 eingesetzt werden kann. Durch eine Verschiebung in Richtung der Längsrichtung L der Dachleiste 2 wird der Nutenstein in einen verengten Bereich der Ausnehmung 64 verschoben, so dass der Nutenstein 58 aus dem Hohlraum 60 nicht wieder austreten kann.

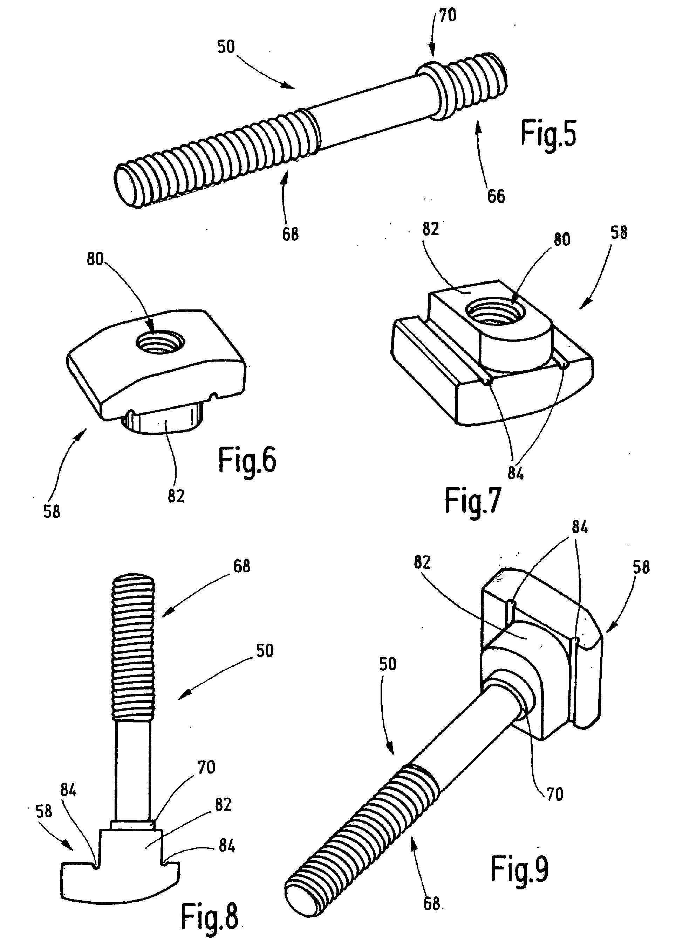

Figur 5 zeigt einen Stehbolzen 50 mit einem ersten Gewinde 66, einem zweiten Gewinde 68 und einem Halterand 70. Das erste Gewinde 66 greift in ein Gewinde eines Nutensteins 60 ein, während das Gewinde 68 der Befestigung der Dachleiste 2 vom Fahrzeuginneren her dient.

Figur 6 zeigt einen Nutenstein 58, mit einem durchgehenden Gewinde 80. Der Querschnitt des Nutensteins 58 ist an das Innenprofil der Dachleiste 2 angepasst. Der Nutenstein 58 weist zudem einen Vorsprung 82 auf, mit dem der Nutenstein 58 innerhalb der Ausnehmung 64 geführt wird.

Figur 7 zeigt einen Nutenstein 58 von der Unterseite her. Hierbei sind deutlich zwei Nuten 84 zu erkennen, die eine Führung des Nutensteins 58 innerhalb der Ausnehmung 64 bewirken.

Figur 8 zeigt einen Nutenstein 58 mit eingeschraubten Stehbolzen 50. Durch den Rand 70 ergibt sich ein wohl definierter Sitz des Stehbolzen 50.

Figur 9 zeigt den Nutenstein 58 mit eingeschraubten Stehbolzen 50 in einer dreidimensionalen Ansicht. Es ist hierbei zu erkennen, dass der Vorsprung 82 eine Rundung aufweist. Diese Rundung ermöglicht eine passende Anlage an das Ende der Ausnehmung 64, an das der Nutenstein 58 bei seiner Positionierung anschlägt. Ein gerundetes Ende der Ausnehmung 64 ist vorteilhaft hinsichtlich der Herstellung und der Stabilität.

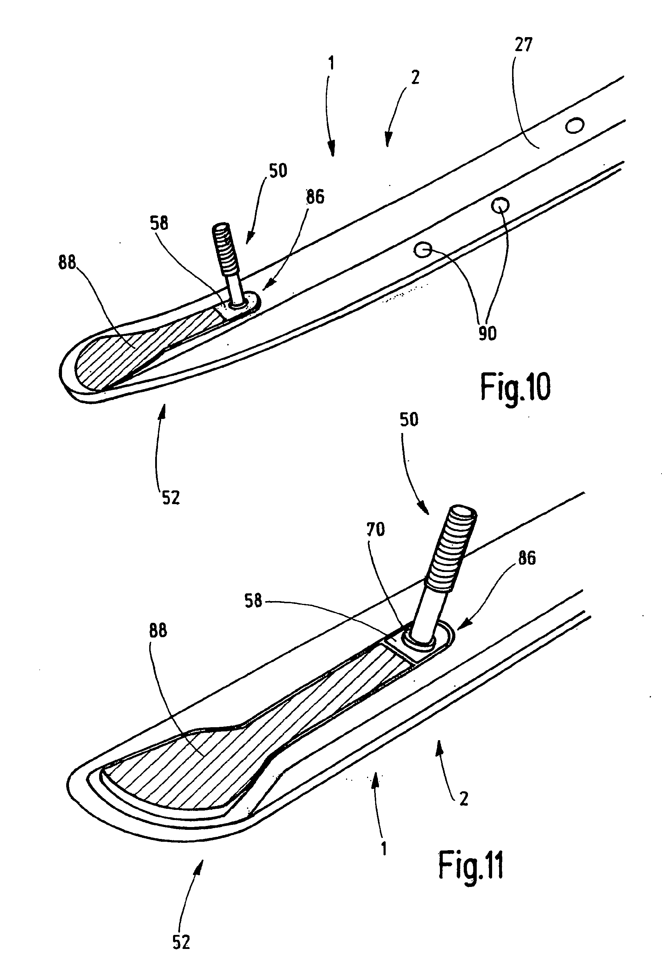

Figur 10 zeigt einen Bereich einer Dachleiste 2 bei Betrachtung von der Seite der Anlagefläche 27, also von der Unterseite aus. in den Nutenstein 58 ist ein Stehbolzen 50 eingeschraubt. Der Nutenstein wird in Längsrichtung einerseits vom Ausnehmungsende 86 und andererseits vom Plastiksperrelement 88 fixiert. Die zwei Sacklöcher 90 ermöglichen die Fixierung eines Querträgers.

Figur 11 zeigt den vorderen Bereich 52 einer Dachleiste 2 und verdeutlicht den Einschub des Plastiksperrelements 88.

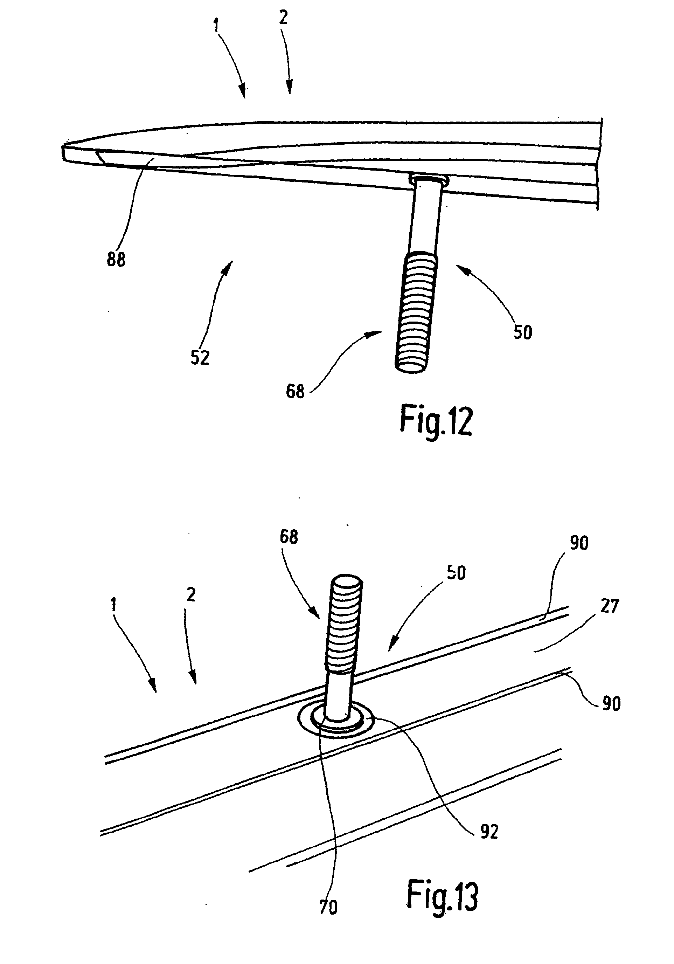

Figur 12 zeigt den vorderen Bereich 52 einer Dachleiste 2 in der Seitenansicht. Hier ist die Dachträgerbefestigungskante 56 deutlich zu erkennen.

Figur 13 zeigt einen in einer Blindniete 92 angeordneten Stehbolzen 50. An der Anlagefläche 27 sind seitliche Erhebungen 90 ausgeführt, die unter anderem die Anlage der Dachleiste 2 an der Fahrzeugkarosserie 13 klar definieren oder der Positionierung einer Schaumstoffdichtung unterhalb der Dachleiste 2 dienen können.

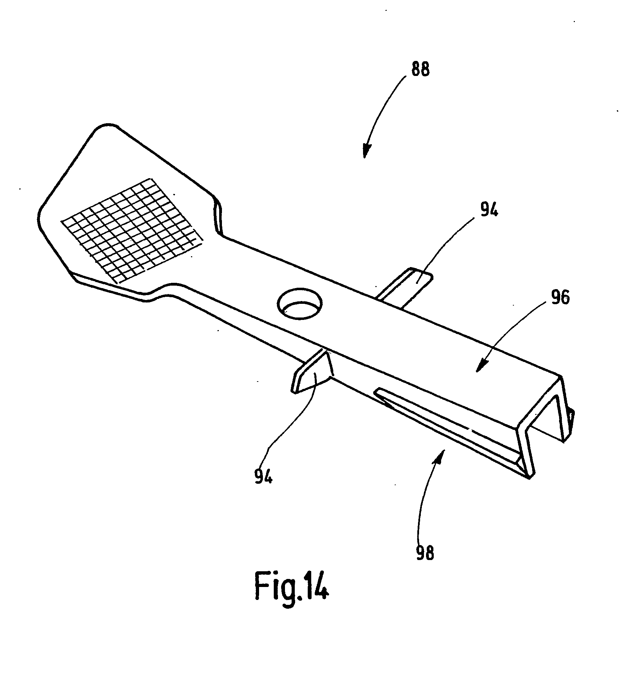

Figur 14 zeigt ein Plastiksperrelement 88 mit Führungsflügeln 94. Das Plastiksperrelement 88 ist dabei derart geformt, dass es mit seiner Unterseite 96 einen in etwa planen Abschluß zur Anlagefläche 27 bildet und dass es mit seiner Oberseite 98 der Form der Dachleiste 2 folgt.

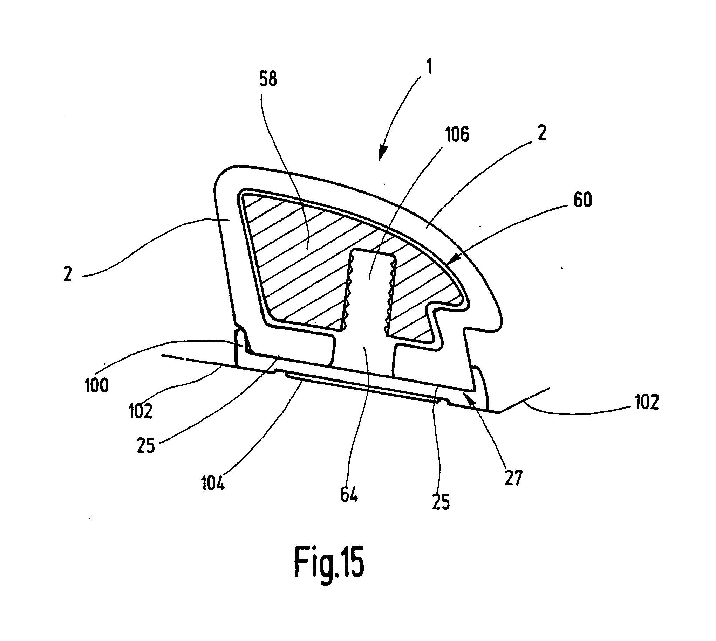

Figur 15 zeigt ein weiteres Ausführungsbeispiel. Hier ist die Anlagefläche 27 an zwei breiten Auflagestegen 25 ausgebildet und liegt auf einer Dichtung 100 auf. Die Dachoberfläche ist mittels der gestrichelten Linie 102 symbolisiert. Die Dichtung 100 liegt auf einem Klebestreifen 104 auf. Der Nutenstein 58 weist ein Gewinde 106 auf und ist in einen Holraum 60 der Dachleiste 2 eingebracht. Bei einem erfindungsgemäßen Dachträgersystem 1 kann aber auf eine Dichtung 100 auch verzichtet werden, da sich nur sehr geringe Spalte ergeben.

Nachfolgend wird nun das Herstellungsverfahren näher erläutert.

Das Vormaterial zur Herstellung einer Dachleiste, wird nach Anlieferung durch mechanische beziehungsweise mittels flüssigkeits- oder gasförmig-druckbeaufschlagendem Verfahren der Fahrzeugkontur entsprechend geformt, so dass ein spaltarmes aufliegendes Dachträger- beziehungsweise Dachleisten-System entsteht.

Es kann als Grundkörper dabei insbesondere ein Strangpressprofilrohr, ein gewalztes Profilrohr oder auch ein gestanztes Profilrohr verwendet werden. Bei den letzten beiden Herstellungsverfahren wird die Naht anschließend vorzugsweise verschweißt.

Daran anschließend werden die Enden der Dachleiste nunmehr über ein, in der Regel spanendes Verfahren, zur Einbringung von Aufnahmen bearbeitet. Dabei ist insbesondere ein Fräsen in einer Fräsrichtung in Längsrichtung der Dachleiste vorteilhaft.

Die Bearbeitung wird notwendig um Montagematerial, also den eingebrachten Nutenstein und den eingeschraubten Stehbolzen, anzubringen, da die Reling, wegen der aufliegenden Charakteristik von der Fahrzeuginnenseite her besonders einfach montiert werden kann.

Es können also halbzeugherstellende Verfahren eingesetzt werden, die eine Gesamtpreisreduzierung zu den bisherigen verwendeten Techniken darstellt.

Die Enden erhalten somit eine zugänglichen Hohlraum, gewissermaßen eine Tasche, für einen Nutenstein mit Gewinde. Dieser Nutenstein, vorzugsweise aus Feinguss, insbesondere GS 38, bringt eine hohe Zugausreißfestigkeit. Der Nutenstein wird vorzugsweise durch ein Kunststoffspritzgussteil in Position gehalten. Um die geforderten Nutzlasten von Dachleisten-Relingsystems auf das Fahrzeugdach übertragen zu können, werden in regelmäßigen Abständen durch, in einer einfachen Bohrung eingebrachten Blindnietmutter Stehbolzen eingebracht. Diese stellen die Verbindung zu tragenden Teilen an der Karosserie her. Da das Hauptgewicht auf den beiden Nutensteinen ruht, kann daher hier mittels einer ausreichend dimensionierten Blindmutter gearbeitet werden.

Um Kratzbeschädigungen am lackierten Fahrzeug zu vermeiden wird eine Schaumstoffdichtung zum Beispiel Typ EPDM auf der Unterseite der Dachleiste angebracht.

## Patentansprüche

1. Dachträgersystem (1) für ein Fahrzeug, insbesondere für einen Personenkraftwagen, mit mindestens einer Dachleiste (2), die einstückig ausgebildet und mit einer Befestigungseinrichtung an der Fahrzeugkarosserie (13) festlegbar ist, wobei die Dachleiste (2) eine im Wesentlichen durchgängig auf die Fahrzeugkarosserie (13) auflegbare, sich über die Länge der Dachleiste (2) erstreckende, der Fahrzeugkarosseriekontur angepasste Anlagefläche (27) aufweist und die Befestigungseinrichtung ein Halteelement (58) aufweist, das in einem Hohlraum (60) der Dachleiste (2) nach Art eines Nutsteins angeordnet ist, **dadurch gekennzeichnet daß** die Dachleiste (2) mindestens eine Ausnehmung (64) in der Anlagefläche (27) zur Bildung eines Zugangs in den Hohlraum (60) aufweist die Ausnehmung (64) einen vergrößerten Bereich zum Einsetzen des einen Nutstein bildenden Halteelements (58) aufweist und ferner ein verengter Bereich der Ausnehmung (64) vorgesehen ist, in den der Nutstein verschoben wird, sodass er aus dem Hohlraum (60) nicht wieder austreten kann.

2. Dachträgersystem nach Anspruch 1, **dadurch gekennzeichnet, dass** die Dachleiste (2) ein Hohlprofil mit dem Hohlraum (60) aufweist.

3. Dachträgersystem nach einem der vorhergehenden Ansprüche, **dadurch gekennzeichnet, dass** die Dachleiste (2) mindestens eine Ausnehmung (64) in der Anlagefläche (27) zur Bildung eines Zugangs in den Hohlraum (60) aufweist.

4. Dachträgersystem nach einem der vorhergehenden Ansprüche, **dadurch gekennzeichnet, dass** in dem Halteelement (58) ein Befestigungselement (50) zur Befestigung der Dachleiste (2) an der Fahrzeugkarosserie (13) angeordnet ist.

5. Dachträgersystem nach Anspruch 4, **dadurch gekennzeichnet, dass** das Befestigungselement (50) ein Stehbolzen ist.

6. Dachträgersystem nach einem der Ansprüche 4 oder 5, **dadurch gekennzeichnet, dass** das Befestigungselement (50) in das Halteelement (58) eingeschraubt ist.

7. Dachträgersystem nach einem der Ansprüche 5 oder 6, **dadurch gekennzeichnet, dass** der Stehbolzen ein erstes Gewinde (66), ein zweites Gewinde (68) und einen zwischen den Gewinden (66,68) liegenden Halterand (70) aufweist, wobei das erste Gewinde (66) in ein Gewinde des Halteelements (58) eingeschraubt ist.

8. Dachträgersystem nach einem der vorhergehenden Ansprüche, **dadurch gekennzeichnet, dass** der Querschnitt des Halteelements (58) an das Innenprofil der Dachleiste (2) angepasst ist.

9. Dachträgersystem nach einem der Ansprüche 3 bis 8, **dadurch gekennzeichnet, dass** das Halteelement (58) einen der Führung in der Ausnehmung (64) dienenden Vorsprung (82) aufweist.

10. Dachträgersystem nach Anspruch 9, **dadurch gekennzeichnet, dass** der Vorsprung (82) eine Rundung aufweist, die in passender Anlage an dem Ende der Ausnehmung (64) anliegt.

11. Dachträgersystem nach einem der vorhergehenden Ansprüche, **dadurch gekennzeichnet, dass** das Halteelement (58) mittels eines Plastiksperrelements (88) in dem Hohlraum (60) fixiert ist.

12. Dachträgersystem nach einem der vorhergehenden Ansprüche, **dadurch gekennzeichnet, dass** die Anlagefläche (27) eine durch Nachbearbeitung angepasste Anlagefläche (27) ist.

13. Dachträgersystem nach einem der vorhergehenden Ansprüche, **dadurch gekennzeichnet, dass** die Anlagefläche (27) derart ausgestaltet und angeordnet ist, dass zumindest die äußere, der Fahrzeugkarosserie (13) zugeordnete Randkante (30) der Dachleiste (2) mit der Fahrzeugkarosserie (13) eine Schattenfuge (31) bildet.

14. Dachträgersystem nach einem der vorhergehenden Ansprüche, **dadurch gekennzeichnet, dass** die Anlagefläche (27) an mindestens einem Auflagesteg (25) ausgebildet ist.

15. Dachträgersystem nach einem der vorhergehenden Ansprüche, **dadurch gekennzeichnet, dass** die Dachleiste (2) aus Aluminium, Magnesium, Stahl und/oder Messing beziehungsweise deren Legierungen besteht.

16. Dachträgersystem nach Anspruch 15, **dadurch gekennzeichnet, dass** die Oberfläche der aus Aluminium bestehenden Dachleiste (2) poliert und eloxiert beziehungsweise lackierbeschichtet ist.

17. Dachträgersystem nach einem der vorgehenden Ansprüche, **dadurch gekennzeichnet, dass** die Oberfläche der Dachleiste (2) mit einer Oberflächenbeschichtung versehen ist.

18. Dachträgersystem nach Anspruch 17, **dadurch gekennzeichnet, dass** die Oberflächenbeschichtung eine Verchromung, eine Pulver- und/oder Lackierbeschichtung ist.

19. Verfahren zur Herstellung eines Dachträgersystems nach einem oder mehreren der vorhergehenden Ansprüche, **dadurch gekennzeichnet, dass** bei einstückiger Ausbildung der Dachleiste diese entsprechend der Fahrzeugkarosseriekontur gebogen wird und mittels eines materialaustragenden Schritts mindestens eine Ausnehmung in Längsrichtung der Dachleiste erzeugt wird, insbesondere an den Enden der Dachleiste.

20. Verfahren nach Anspruch 19, **dadurch gekennzeichnet, dass** nach der spanenden Bearbeitung die aus Aluminium bestehende Dachleiste poliert und eloxiert beziehungsweise lackierbeschichtet wird.

21. Fahrzeug mit mindestens einer Dachleiste nach einem oder mehreren der vorhergehenden Ansprüche, **dadurch gekennzeichnet, dass** die Kraftfahrzeugkarosserie, insbesondere jeder Seitenwandrahmen des Kraftfahrzeugs, mindestens eine rinnenförmige Vertiefung aufweist, die eine Dachleiste im Bereich ihrer Anlagefläche teilweise aufnimmt.

22. Fahrzeug nach Anspruch 21, mit zwei, parallel auf der Fahrzeugkarosserie, insbesondere auf den beiden Seitenwandrahmen des Fahrzeugs, angeordneten Dachleisten nach einem oder mehreren der vorhergehenden Ansprüche.

## Claims

1. Roof rack system (1) for a vehicle, in particular for a passenger car, having at least one roof rail (2) which is configured in one piece and can be located with an attaching device to the vehicle body (13), wherein the roof rail (2) has a contact surface (27) extending over the length of the roof rail (2), the contact surface (27) being placeable substantially continuously on the vehicle body (13) and is conformed to the vehicle body contour, and the attaching device has a retaining element (58) which is located in a cavity (60) of the roof rail (2) in the manner of a slot nut, **characterized in that** the roof rail (2) has at least one recess (64) in the contact surface (27) to create an access to the cavity (60), that the recess (64) has an enlarged area to insert the retaining element (58) which forms a slot nut and further that a narrowed area is provided into which the slot nut is displaced such that it cannot exit from the cavity (60).

2. Roof rack system according to claim 1, **characterized in that** the roof rail (2) has a hollow profile with the cavity (60).

3. Roof rack system according to one of the preceding claims, **characterized in that** the roof rail (2) has at least one recess (64) in the contact surface (27) to create an access to the cavity (60).

4. Roof rack system according to one of the preceding claims, **characterized in that** an attaching element (50) is arranged in the retaining element (58) to attach the roof rail (2) to the vehicle body (13).

5. Roof rack system according to claim 4, **characterized in that** the attaching element (50) is a stud bolt.

6. Roof rack system according to one of the claims 4 or 5, **characterized in that** the attaching element (50) is screwed into the retaining element (58).

7. Roof rack system according to one of the claims 5 or 6, **characterized in that** the stud bolt has a first thread (66), a second thread (68) and a retaining lip (70) lying between the threads (66, 68), wherein the first thread (66) is screwed into a thread of the retaining element (58).

8. Roof rack system according to one of the preceding claims, **characterized in that** the cross-section of the retaining element (58) is matched to the inside profile of the roof rail (2).

9. Roof rack system according to one of the claims 3 to 8, **characterized in that** the retaining element (58) has a projection (82) acting to guide it in the recess (64).

10. Roof rack system according to claim 9, **characterized in that** the projection (82) has a curvature which abuts the end of the recess (64) in matching contact.

11. Roof rack system according to one of the preceding claims, **characterized in that** the retaining element (58) is locked in position in the cavity (60) by means of a plastic locking element (88).

12. Roof rack system according to one of the preceding claims, **characterized in that** the contact surface (27) is a contact surface conformed by post-machining.

13. Roof rack system according to one of the preceding claims, **characterized in that** the contact surface (27) is configured and arranged in such a way that at least the outer lateral edge (30) of the roof rail (2) assigned to the vehicle body (13) forms a shadow joint (31) with the vehicle body (13).

14. Roof rack system according to one of the preceding claims, **characterized in that** the contact surface (27) is formed on at least one base web (25).

15. Roof rack system according to one of the preceding claims, **characterized in that** the roof rail (2) consists of aluminum, magnesium, steel and/or brass, or their alloys respectively.

16. Roof rack system according to claim 15, **characterized in that** the surface of the aluminum roof rail (2) is polished and anodized or paint coated respectively.

17. Roof rack system according to one of the preceding claims, **characterized in that** the surface of the roof rail (2) is provided with a surface coating.

18. Roof rack system according to claim 17, **characterized in that** the surface coating is chrome plating, a powder and/or paint coating.

19. Method for producing a roof rack system according to one or more of the preceding claims, **characterized in that**, with the roof rail formed in one piece, it is bent to correspond to the vehicle body contour and by means of a material-removing step at least one recess is created in the longitudinal direction of the roof rail, in particular at the ends of the roof rail.

20. Method according to claim 19, **characterized in that** following the machining the aluminum roof rail is polished and anodized, or paint coated respectively.

21. Vehicle with at least one roof rail according to one or more of the preceding claims, **characterized in that** the vehicle body, in particular each side panel frame of the vehicle, has at least one gutter-shaped depression which partially accommodates a roof rail in the area of its contact surface.

22. Vehicle according to claim 21, having two roof rails arranged in parallel on the vehicle body, in particular on the two side panel frames of the vehicle, according to one or more of the preceding claims.

## Revendications

1. Système de galerie de toit (1) pour un véhicule, en particulier pour une voiture de tourisme, comprenant au moins une barre de toit (2) qui est réalisée d'une seule pièce et peut être fixée sur la carrosserie du véhicule (13) avec un dispositif de fixation, dans lequel la barre de toit (2) présente une surface d'appui (27) pouvant être appliquée essentiellement en continu sur la carrosserie du véhicule (13), s'étendant sur la longueur de la barre de toit (2), adaptée au contour de la carrosserie du véhicule, et le dispositif de fixation présente un élément de retenue (58) qui est disposé dans un espace creux (60) de la barre de toit (2) à la manière d'un coulisseau, **caractérisé en ce que** la barre de toit (2) présente au moins un évidement (64) dans la surface d'appui (27) pour former un accès à l'espace creux (60), l'évidement (64) présente une zone agrandie pour insérer l'élément de retenue (58) formant un coulisseau et **en ce qu'**il est prévu en outre une zone rétrécie de l'évidement (64) dans laquelle le coulisseau est déplacé de telle manière qu'il ne peut pas ressortir de l'espace creux (60).

2. Système de galerie de toit selon la revendication 1, **caractérisé en ce que** la barre de toit (2) présente un profilé creux avec l'espace creux (60).

3. Système de galerie de toit selon l'une des revendications précédentes, **caractérisé en ce que** la barre de toit (2) présente au moins un évidement (64) dans la surface d'appui (27) pour former un accès à l'espace creux (60).

4. Système de galerie de toit selon l'une des revendications précédentes, **caractérisé en ce qu'**un élément de fixation (50) est disposé dans l'élément de retenue (58) pour fixer la barre de toit (2) sur la carrosserie du véhicule (13).

5. Système de galerie de toit selon la revendication 4, **caractérisé en ce que** l'élément de fixation (50) est un goujon fileté.

6. Système de galerie de toit selon l'une des revendications 4 ou 5, **caractérisé en ce que** l'élément de fixation (50) est vissé dans l'élément de retenue (58).

7. Système de galerie de toit selon l'une des revendications 5 ou 6, **caractérisé en ce que** le goujon fileté présente un premier filetage (66), un deuxième filetage (68) et un bord de retenue (70) situé entre les filetages (66, 68), le premier filetage (66) étant vissé dans un filetage de l'élément de retenue (58).

8. Système de galerie de toit selon l'une des revendications précédentes, **caractérisé en ce que** la section de l'élément de retenue (58) est adaptée au profil intérieur de la barre de toit (2).

9. Système de galerie de toit selon l'une des revendications 3 à 8, **caractérisé en ce que** l'élément de retenue (58) présente une saillie (82) servant au guidage dans l'évidement (64).

10. Système de galerie de toit selon la revendication 9, **caractérisé en ce que** la saillie (82) présente un arrondi qui s'applique sur l'extrémité de l'évidement (64) avec un appui ajusté.

11. Système de galerie de toit selon l'une des revendications précédentes, **caractérisé en ce que** l'élément de retenue (58) est fixé dans l'espace creux (60) au moyen d'un élément de blocage en plastique (88).

12. Système de galerie de toit selon l'une des revendications précédentes, **caractérisé en ce que** la surface d'appui (27) est une surface d'appui (27) ajustée par usinage postérieur.

13. Système de galerie de toit selon l'une des revendications précédentes, **caractérisé en ce que** la surface d'appui (27) est formée et disposée de telle manière qu'au moins l'arête de bord (30) extérieure de la barre de toit (2), associée à la carrosserie du véhicule (13), forme un joint creux (31) avec la carrosserie du véhicule (13).

14. Système de galerie de toit selon l'une des revendications précédentes, **caractérisé en ce que** la surface d'appui (27) est formée sur au moins une nervure d'appui (25).

15. Système de galerie de toit selon l'une des revendications précédentes, **caractérisé en ce que** la barre de toit (2) est réalisée en aluminium, magnésium, acier et/ou laiton, respectivement leurs alliages.

16. Système de galerie de toit selon la revendication 15, **caractérisé en ce que** la surface de la barre de toit (2) réalisée en aluminium est polie et anodisée, ou revêtue par laquage.

17. Système de galerie de toit selon l'une des revendications précédentes, **caractérisé en ce que** la surface de la barre de toit (2) est pourvue d'un revêtement de surface.

18. Système de galerie de toit selon la revendication 17, **caractérisé en ce que** le revêtement de surface est un chromage, un revêtement par poudre et/ou par laquage.

19. Procédé de fabrication d'un système de galerie de toit selon l'une ou plusieurs des revendications précédentes, **caractérisé en ce que**, dans le cas de réalisation d'une seule pièce de la barre de toit, celle-ci est courbée de manière correspondant au contour de la carrosserie du véhicule et au moins un évidement est produit dans la direction longitudinale de la barre de toit au moyen d'une étape d'enlèvement de matière, en particulier aux extrémités de la barre de toit.

20. Procédé selon la revendication 19, **caractérisé en ce que**, après l'usinage par enlèvement de copeaux, la barre de toit réalisée en aluminium est polie et anodisée, ou revêtue par laquage.

21. Véhicule avec au moins une barre de toit selon l'une ou plusieurs des revendications précédentes, **caractérisé en ce que** la carrosserie du véhicule automobile, en particulier chaque cadre de panneau latéral du véhicule, présente au moins un creux en forme de gouttière qui loge partiellement une barre de toit dans la zone de sa surface d'appui.

22. Véhicule selon la revendication 21, comprenant deux barres de toit selon l'une ou plusieurs des revendications précédentes, disposées parallèlement sur la carrosserie du véhicule, en particulier sur les deux cadres de panneaux latéraux du véhicule.
